# DEMANDE DE BREVET EUROPEEN

(11) **EP 0 928 060 A1**
(43) Date de publication de la demande: **07.07.1999**
(21) Numéro de dépôt: 98204432.3
(22) Date de dépôt: 24.12.1998
(51) Int. Cl.: H02M 7/10, H02M 3/07

(54) **Convertisseur de tension continue à rendement amélioré**

(30) Priorité: 31.12.1997 FR 9716762
(71) Demandeur: Koninklijke Philips Electronics N.V., 5621 BA Eindhoven (NL)
(72) Inventeur: Journeau, Jacques, Société Civile S.P.I.D., 75008 Paris (FR)
(74) Mandataire: Caron, Jean

(57) **Abrégé**

La présente invention concerne un convertisseur de tension continue, destiné à multiplier une tension d'entrée et comprenant N cellules élémentaires (ECi) disposées en cascade, chacune étant destinée à mémoriser la valeur de la tension d'entrée dans deux capacités (Ci1, Ci2).

Selon l'invention, les charges et les décharges des capacités (Ci1, Ci2) sont commandées par des transistors (Ni1, Ni2) dont la conduction est contrôlée au moyen d'un même signal de commande.

Applications : génération de la tension de réglage d'un oscillateur dans un syntoniseur.

## Description

La présente invention concerne un convertisseur de tension continue de type multiplieur, muni d'une entrée de commande et d'une entrée de référence respectivement destinées à recevoir un signal périodique de commande et une tension de référence, et d'une sortie, convertisseur comprenant N cellules élémentaires disposées en cascade, chaque cellule étant munie d'une première et d'une deuxième bornes d'entrée, respectivement reliées aux premières bornes d'une première et d'une deuxième capacités, et d'une première et d'une deuxième bornes de sortie, respectivement reliées aux deuxièmes bornes desdites capacités, la deuxième borne d'entrée étant reliée à la première borne de sortie via un premier élément conducteur de courant unidirectionnel, la première borne de sortie étant reliée à la deuxième borne de sortie via un deuxième élément conducteur de courant unidirectionnel, les bornes d'entrée de la première cellule élémentaire formant les entrées du convertisseur, la deuxième borne de sortie de la N_{ème} cellule élémentaire formant la sortie du convertisseur.

Un tel convertisseur est connu de l'article "The Mosmarx voltage multiplier" de P.E.K. DONALDSON, paru dans Electronics & Wireless World. Cet article décrit notamment un convertisseur dit de Cockroft-Walton, dans lequel les éléments conducteurs de courant unidirectionnel sont des diodes. Lorsque le signal de commande présente un état actif, la première capacité de la i_{ème} cellule élémentaire se charge au travers de la première diode de ladite cellule depuis la deuxième capacité de la (i-1)_{ème} cellule élémentaire, tandis que la deuxième capacité de la i_{ème} cellule élémentaire se décharge au travers de la première diode de la (i+1)_{ème} cellule élémentaire vers la première capacité de ladite cellule. Lorsque le signal de commande présente un état inactif, la première capacité de chaque cellule élémentaire se décharge au travers de la deuxième diode vers la deuxième capacité de cette même cellule. Les diodes génèrent à leurs bornes des chutes de tension non négligeables, particulièrement losqu'on souhaite réaliser un tel convertisseur sous forme intégrée. Les diodes sont alors constituées de transistors dont les collecteurs et les bases, dans le cas de transistors bipolaires, ou les drains et les grilles, dans le cas de transistors MOS, sont reliés ensemble. La chute de tension aux bornes d'une telle diode est alors typiquement de l'ordre de 0,6 Volts. Chaque cellule élémentaire contenant deux diodes, elle occasionne une chute de tension dont la valeur est de l'ordre de 1,2 Volts. Il se produit donc une chute de tension de N.1,2 Volts dans l'ensemble du convertisseur, ce qui rend son utilisation peu avantageuse pour des valeurs de N supérieures à deux, particulièrement dans des applications "basse-tension".

La présente invention a pour but de remédier dans une large mesure à cet inconvénient, en proposant un convertisseur de tension continue dans lequel les chutes de tension générées par les éléments conducteurs de courant unidirectionnel sont quasiment nulles.

En effet, selon la présente invention, un convertisseur de tension continue conforme au paragraphe introductif est caractérisé en ce que les premier et deuxième éléments conducteurs de courant unidirectionnel de chaque cellule élémentaire sont constitués par des premier et deuxième transistors dont la conduction est commandée par un signal généré sur la base du signal de commande.

Dans un tel convertisseur, les chutes de tension aux bornes des trajets de courant principaux des transistors sont très faibles, ce qui permet la mise en cascade d'un grand nombre de cellules élémentaires, et donc l'obtention d'un facteur multiplicatif important entre la tension de référence et la tension de sortie du convertisseur.

Un mode de réalisation particulier de l'invention présente un convertisseur de tension continue tel que décrit ci-dessus, caractérisé en ce qu'il comporte un inverseur, inséré entre l'entrée de commande et la première entrée de la première cellule élémentaire, et en ce que les premier et deuxième transistors de chaque cellule élémentaire ont des types de conductivité différents, les bornes de polarisation des premier et deuxième transistors étant en outre respectivement reliées à la deuxième borne d'entrée et à la première borne de sortie de la cellule via une première et une deuxième diode, et à l'entrée de commande via des capacités de couplage.

Ce mode de réalisation tire pleinement parti de la périodicité du signal de commande pour contrôler de manière simple la conduction des transistors afin de permettre les charges et décharges successives des première et deuxième capacités de chaque cellule. Les première et deuxième diodes permettent d'ajuster les valeurs des composantes continues des tensions présentes aux bornes de polarisation des transistors de sorte que ceux-ci ne risquent pas d'être endommagés lors de leurs commutations. Un autre avantage de ce mode de réalisation est de fixer une limite haute et une limite basse au potentiel de chacune des bornes de polarisation des transistors, limites qui encadrent les seuils de commutation desdits transistors.

Dans une variante de ce mode de réalisation, un convertisseur de tension continue tel que décrit ci-dessus, est caractérisé en ce que les bornes de polarisation des premier et deuxième transistors de la i_{ème} cellule élémentaire, pour i=2 à N, sont reliées aux bornes de polarisation des premier et deuxième transistors de la (i-1)_{ème} cellule élémentaire via des capacités de couplage.

Cette variante de l'invention permet d'assurer que les différences de potentiel appliquées aux bornes des capacités de couplage soient suffisamment faibles pour ne pas endommager le matériau diélectrique qui les constituent.

Le convertisseur de tension continue permet d'obtenir une tension de sortie dont la valeur est (N+1) fois plus grande que la valeur de la tension de référence. Cette tension de sortie peut être avantageusement utilisée pour polariser des diodes de type varicap au sein d'un oscillateur commandé en tension, dans lequel la valeur de la tension de polarisation desdites diodes détermine leur valeur capacitive, et donc la fréquence du signal de sortie de l'oscillateur. Une faible variation de la tension de référence pourra alors provoquer une modification significative de cette fréquence de sortie. Dans une de ses applications, l'invention concerne donc également un dispositif de sélection de signaux radio-électriques, comportant :
. un système d'antenne et de filtrage destiné à la réception desdits signaux et à leur conversion en signaux électroniques,
. un amplificateur faible bruit destiné à amplifier les signaux provenant du système d'antenne et de filtrage,
. un oscillateur commandé en tension destiné à générer un signal dont la fréquence dépend de la valeur d'un signal présent sur une entrée de réglage de l'oscillateur, et
. un mélangeur muni de deux entrées reliées respectivement aux sorties de l'amplificateur faible bruit et de l'oscillateur, et destiné à produire un signal dont la fréquence est égale à la différence entre les fréquences respectives des signaux d'entrée du mélangeur,
dispositif caractérisé en ce qu'il comprend en outre un convertisseur de tension continue tel que décrit plus haut, dont la sortie est reliée à l'entrée de réglage de l'oscillateur et dont l'entrée de référence est destinée à recevoir des tensions dont les valeurs déterminent les fréquences des signaux radio-électriques sélectionnés.

L'invention sera mieux comprise à l'aide de la description suivante, faite à titre d'exemple non-limitatif et en regard des dessins annexés, dans lesquels :
- la figure 1 est un schéma fonctionnel partiel qui représente un dispositif mettant en oeuvre un convertisseur de tension continue conforme à l'invention,
- la figure 2 est un schéma électrique qui représente une cellule élémentaire incluse dans un convertisseur de tension conforme à un mode de réalisation de l'invention, et
- la figure 3 est un schéma électrique qui représente un convertisseur de tension conforme à un mode de réalisation particulier de l'invention.

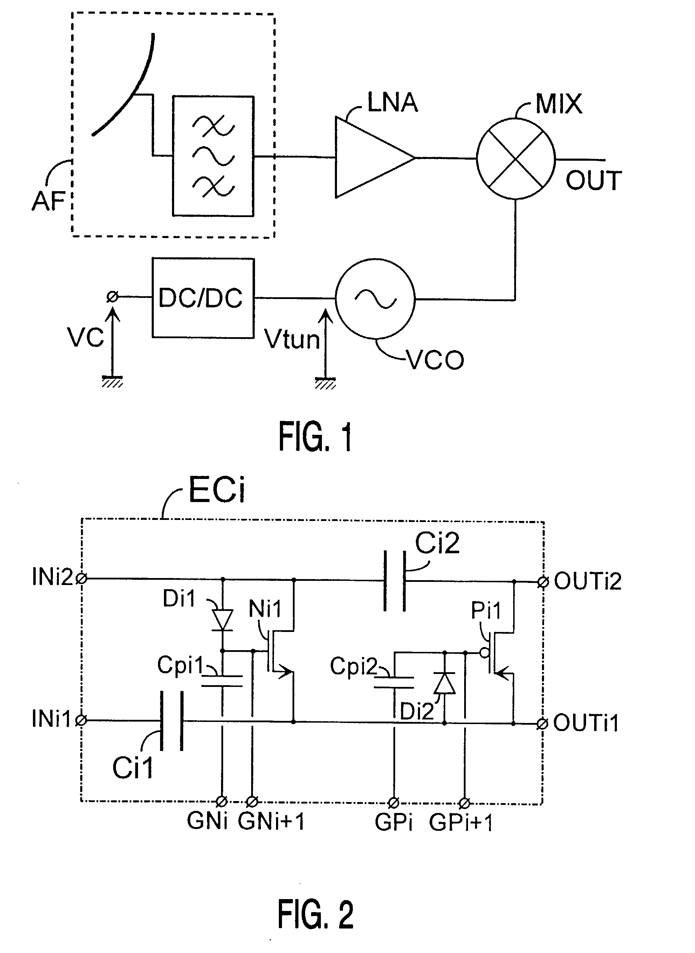

La figure 1 représente un dispositif de sélection de signaux radio-électriques, comportant :
. un système d'antenne et de filtrage AF destiné à la réception desdits signaux et à leur conversion en signaux électroniques,
. un amplificateur faible bruit LNA destiné à amplifier les signaux provenant du système d'antenne et de filtrage AF,
. un oscillateur commandé en tension VCO destiné à générer un signal dont la fréquence dépend de la valeur d'un signal Vtun présent sur une entrée de réglage de l'oscillateur VCO, et
. un mélangeur MIX muni de deux entrées respectivement reliées aux sorties de l'amplificateur faible bruit LNA et de l'oscillateur VCO, et destiné à produire un signal dont la fréquence est égale à la différence entre les fréquences respectives des signaux d'entrée du mélangeur MIX.

Un tel dispositif est couramment réalisé sous la forme d'un circuit intégré, qui est alimenté entre une borne positive d'alimentation et une masse. Le signal Vtun est, le plus souvent, utilisé pour polariser des diodes varicap internes à l'oscillateur VCO, la tension inverse aux bornes desdites diodes déterminant leur valeur capacitive. Si l'on n'utilise pas de convertisseur de tension continue pour produire le signal Vtun, la valeur de celui-ci, et à fortiori l'ampleur des variations qu'il est susceptible de présenter, sont limitées par la valeur de la tension d'alimentation. Or cette valeur est actuellement typiquement de l'ordre de 2 Volts, et est vouée à diminuer, l'une des préoccupations majeures de l'industrie des circuits intégrés étant de réduire la consommation d'énergie et l'encombrement des circuits. L'ampleur des variations du signal Vtun risque donc d'être trop faible pour produire des modifications significatives des valeurs capacitives des diodes varicap de l'oscillateur VCO, et donc de la fréquence du signal de sortie dudit oscillateur. C'est pourquoi le dispositif de sélection comprend un convertisseur de tension continue DC/DC, dont la sortie est reliée à l'entrée de réglage de l'oscillateur VCO. L'entrée de référence est destinée à recevoir une tension VC dont des variations, même si leur amplitude est faible, provoqueront des modifications significatives dans la fréquence de sortie de l'oscillateur VCO, et permettront de faire varier les fréquences des signaux radio-électriques sélectionnés par le dispositif. Ainsi qu'exposé précédemment, les convertisseurs de tension continue connus provoquent des chutes de tension trop importantes pour pouvoir être efficacement utilisés dans une application de ce type. Un convertisseur de tension continue DC/DC, présentant un rendement supérieur à celui des convertisseurs connus, permet de réaliser la fonction d'amplification décrite ci-dessus.

La figure 2 représente une cellule élémentaire ECi choisie parmi N cellules élémentaires qui sont disposées en cascade au sein d'un convertisseur de tension continue conforme à l'invention. Cette cellule ECi est munie d'une première et d'une deuxième bornes d'entrée, INi1 et INi2, respectivement reliées aux premières bornes d'une première et d'une deuxième capacités, Ci1 et Ci2, et d'une première et d'une deuxième bornes de sortie, OUTi1 et OUTi2, respectivement reliées aux deuxièmes bornes desdites capacités, Ci1 et Ci2. La deuxième borne d'entrée INi2 est reliée à la première borne de sortie OUTi1 via un premier transistor Ni1, la première borne de sortie OUTi1 étant reliée à la deuxième borne de sortie OUTi2 via un deuxième transistor Pi1. Le premier transistor Ni1 est, dans cet exemple, de type NMOS, le deuxième transistor Pi1 étant de type PMOS. Les bornes de polarisation des premier et deuxième transistors, Ni1 et Pi1, qui sont constituées dans ce cas par les grilles desdits transistors, sont respectivement reliées à la deuxième borne d'entrée INi2 et à la première borne de sortie OUTi1 de la cellule ECi via une première et une deuxième diode, Di1 et Di2, et à des entrées de commande GNi et GPi via des capacités de couplage Cpi1 et Cpi2.

Les entrées de commande GNi et GPi sont destinées à recevoir un même signal de commande. Quand le signal de commande présente un état actif, c'est-à-dire dans cet exemple un niveau logique 1, le premier transistor Ni1 est conducteur tandis que le deuxième transistor Pi1 est bloqué. La première capacité Ci1 se charge alors au travers du premier transistor Ni1 depuis la deuxième entrée INi2, c'est-à-dire depuis une deuxième capacité d'une cellule élémentaire ECi-1, non représentée sur la figure, qui serait disposée en amont de la cellule ECi, tandis que la deuxième capacité Ci2 se décharge vers la deuxième sortie OUTi2, c'est-à-dire vers une première capacité d'une cellule élémentaire ECi+1, non représentée sur la figure, qui serait disposée en aval de la cellule ECi. Lorsque le signal de commande présente un état inactif, c'est-à-dire dans cet exemple un niveau logique 0, le premier transistor Ni1 est bloqué tandis que le deuxième transistor Pi1 est conducteur. La première capacité Ci1 de la cellule élémentaire ECi se décharge au travers du deuxième transistor Pi1 vers la deuxième capacité Ci2 de cette même cellule ECi.

Les première et deuxième diodes Di1 et Di2 ont pour fonction de référencer les signaux présents aux grilles des premier et deuxième transistors Ni1 et Pi1 à des potentiels voisins des potentiels de drain et de source, respectivement, desdits transistors. Ceci permet de minimiser les risques d'endommagement des jonctions grille-drain, pour le premier transistor Ni1, et grille-source, pour le deuxième transistor Pi1, du fait de trop grandes différences de potentiel aux bornes desdites jonctions. D'autre part, les première et deuxième diodes Di1 et Di2 délimitent des plages de variations de potentiel des bornes de polarisation des premier et deuxième transistors Ni1 et Pi1, plages de variations qui englobent les seuils de commutation desdits transistors. Ceci rend possible la mise en conduction de ces transistors quelle que soit la valeur de i, c'est-à-dire quelle que soit la position qu'occupe la i_{ème} cellule élémentaire ECi au sein du convertisseur.

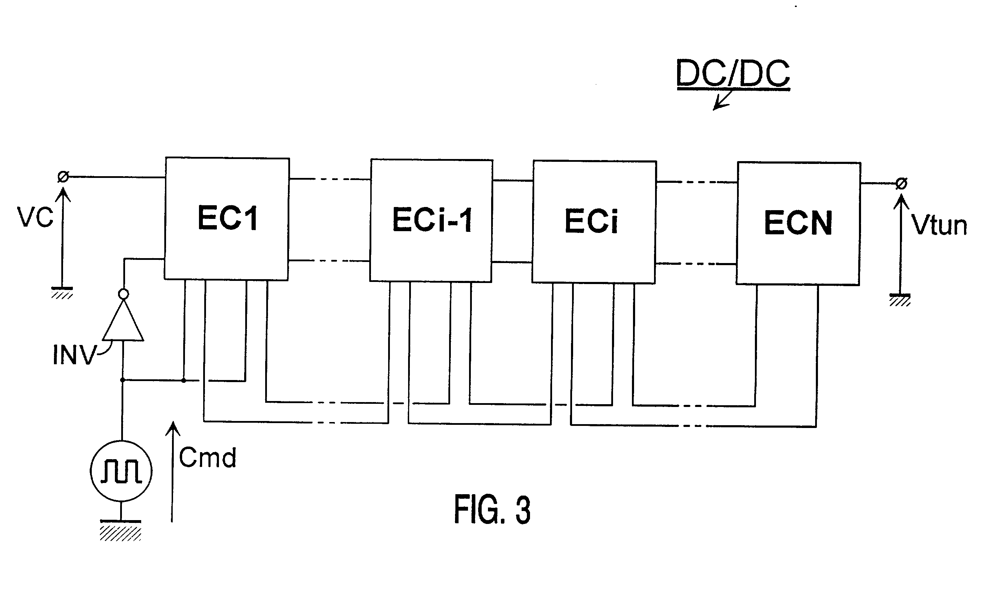

La figure 3 représente un convertisseur de tension continue DC/DC conforme à un mode de réalisation préféré de l'invention. Ce convertisseur est muni d'une entrée de commande et d'une entrée de référence respectivement destinées à recevoir un signal périodique de commande Cmd et une tension de référence VC, et d'une sortie destinée à délivrer une tension Vtun dont la valeur nominale est N fois supérieure à la tension de référence VC. Ce convertisseur DC/DC comprend N cellules élémentaires ECi, pour i=1 à N, conformes à la description précédente et disposées en cascade, les bornes d'entrée de la première cellule élémentaire EC1 formant les entrées du convertisseur DC/DC, la deuxième borne de sortie de la N_{ème} cellule élémentaire ECN formant la sortie du convertisseur DC/DC. Le convertisseur DC/DC comporte, dans ce mode de réalisation particulier, un inverseur INV, inséré entre l'entrée de commande et la première entrée de la première cellule élémentaire. Cet inverseur INV sera avantageusement réalisé sous forme CMOS au moyen d'un transistor PMOS et d'un transistor NMOS dont les trajets de courant principaux seront disposés en série entre les première et deuxième bornes d'entrée de la première cellule élémentaire EC1, de sorte que l'amplitude de variation de signal de sortie de l'inverseur INV soit égale à la valeur de la tension de référence VC. Dans la variante de l'invention représentée ici, les grilles des premier et deuxième transistors de la i_{ème} cellule élémentaire ECi, pour i=2 à N, sont reliées aux bornes de polarisation des premier et deuxième transistors de la (i-1)_{ème} cellule élémentaire via les première et deuxième capacités de couplage Cpi1 et Cpi2. Ceci est réalisé en connectant les bornes GNi et GPi de la i_{ème} cellule élémentaire ECi aux bornes GNi et GPi de la (i-1)_{ème} cellule élémentaire ECi-1. Cette variante de l'invention permet d'assurer que la tension continue présente aux bornes des première et deuxième capacités de couplage Cpi1 et Cpi2 soit toujours de l'ordre de VC quelle que soit la valeur de i. Si les capacités de couplage étaient directement connectées à l'entrée de commande du convertisseur, la tension continue présente aux bornes des première et deuxième capacités de couplage Cpi1 et Cpi2 de la i_{ème} cellule élémentaire ECi serait de l'ordre de (i+1).VC. Au delà d'une certaine valeur de i, cette tension pourrait devenir suffisamment importante pour provoquer des dommages au diélectrique constituant les première et deuxième capacités de couplage Cpi1 et Cpi2.

Lors de la mise sous tension d'un tel convertisseur de tension continue, un régime transitoire s'établit, pendant lequel les première et deuxième capacités des N cellules élémentaires ECi, pour i=1 à N, se chargent progressivement dans le sens des i croissants. Conformément au fonctionnement décrit plus haut, la première capacité C11 de la première cellule élémentaire EC1 se charge sous la tension VC lorsque le signal de commande Cmd est actif, puis se décharge dans la deuxième capacité C12 de ladite cellule élémentaire EC1 lorsque le signal de commande Cmd devient inactif. Cette deuxième capacité C12 se décharge dans la première capacité C21 de la deuxième cellule élémentaire EC2 lorsque le signal de commande Cmd redevient actif, la première capacité C11 de la première cellule élémentaire EC1 se rechargeant simultanément sous la tension VC. Lorsque le signal de commande Cmd redevient inactif, les premières capacités C11 et C21 des première et deuxième cellules élémentaires EC1 et EC2 se déchargent respectivement dans les deuxièmes capacités C12 et C22 desdites cellules élémentaires EC1 et EC2. Ce processus se répète et se propage jusqu'à ce qu'un régime permanent soit établi, dans lequel la tension aux bornes de chaque capacité Ci1 et Ci2, pour i=1 à N, est voisine de VC. Dans ce régime permanent, les charges et décharges des capacités continuent de se produire, mais leurs ampleurs sont très faibles, et la tension de sortie Vtun est sensiblement égale à (N+1).VC.

## Revendications

1. Convertisseur de tension continue de type multiplieur, muni d'une entrée de commande et d'une entrée de référence respectivement destinées à recevoir un signal périodique de commande et une tension de référence, et d'une sortie, convertisseur comprenant N cellules élémentaires disposées en cascade, chaque cellule étant munie d'une première et d'une deuxième bornes d'entrée, respectivement reliées aux premières bornes d'une première et d'une deuxième capacités, et d'une première et d'une deuxième bornes de sortie, respectivement reliées aux deuxièmes bornes desdites capacités, la deuxième borne d'entrée étant reliée à la première borne de sortie via un premier élément conducteur de courant unidirectionnel, la première borne de sortie étant reliée à la deuxième borne de sortie via un deuxième élément conducteur de courant unidirectionnel, les bornes d'entrée de la première cellule élémentaire formant les entrées du convertisseur, la deuxième borne de sortie de la N_{ème} cellule élémentaire formant la sortie du convertisseur,
caractérisé en ce que les premier et deuxième éléments conducteurs de courant unidirectionnel de chaque cellule élémentaire sont constitués par des premier et deuxième transistors dont la conduction est commandée par un signal généré sur la base du signal de commande.

2. Convertisseur de tension continue selon la revendication 1, caractérisé en ce qu'il comporte un inverseur, inséré entre l'entrée de commande et la première entrée de la première cellule élémentaire, et en ce que les premier et deuxième transistors de chaque cellule élémentaire ont des types de conductivité différents, les bornes de polarisation des premier et deuxième transistors étant en outre respectivement reliées à la deuxième borne d'entrée et à la première borne de sortie de la cellule via une première et une deuxième diode, et à l'entrée de commande via des capacités de couplage.

3. Convertisseur de tension continue selon la revendication 2, caractérisé en ce que les bornes de polarisation des premier et deuxième transistors de la i_{ème} cellule élémentaire, pour i=2 à N, sont reliées aux bornes de polarisation des premier et deuxième transistors de la (i-1)_{ème} cellule élémentaire via des capacités de couplage.

4. Dispositif de sélection de signaux radio-électriques, comportant :
. un système d'antenne et de filtrage destiné à la réception desdits signaux et à leur conversion en signaux électroniques,
. un amplificateur faible bruit destiné à amplifier les signaux provenant du système d'antenne et de filtrage,
. un oscillateur commandé en tension destiné à générer un signal dont la fréquence dépend de la valeur d'un signal présent sur une entrée de réglage de l'oscillateur, et
. un mélangeur muni de deux entrées respectivement reliées aux sorties de l'amplificateur faible bruit et de l'oscillateur, et destiné à produire un signal dont la fréquence est égale à la différence entre les fréquences respectives des signaux d'entrée du mélangeur,
dispositif caractérisé en ce qu'il comprend en outre un convertisseur de tension continue conforme à la revendication 1, dont la sortie est reliée à l'entrée de réglage de l'oscillateur et dont l'entrée de référence est destinée à recevoir des tensions dont les valeurs déterminent les fréquences des signaux radio-électriques sélectionnés.
